# EUROPEAN PATENT SPECIFICATION

(11) **EP 3 020 758 B1**
(45) Date of publication and mention of the grant of the patent: **28.03.2018**
(21) Application number: 14823729.0
(22) Date of filing: 18.06.2014
(51) Int. Cl.: C08L 9/02, C08K 3/04, C08K 5/13, C08K 5/40, F16C 33/72, F16J 15/32

(54) **NITRILE RUBBER COMPOSITION**
NITRILKAUTSCHUKZUSAMMENSETZUNG
COMPOSITION DE CAOUTCHOUC NITRILE

(30) Priority: 11.07.2013 JP 2013145465
(43) Date of publication of application: 18.05.2016
(73) Proprietor: NOK Corporation, Minato-ku Tokyo 105-8585 (JP)
(72) Inventor: YAMOTO, Hiromitsu, Fujisawa-shi Kanagawa 251-0042 (JP); KOMIYA, Eiji, Fujisawa-shi Kanagawa 251-0042 (JP); AOYAGI, Yuichi, Fujisawa-shi Kanagawa 251-0042 (JP); FURUKAWA, Tomonori, Fujisawa-shi Kanagawa 251-0042 (JP); KAISE, Tomohiro, Fujisawa-shi Kanagawa 251-0042 (JP)
(74) Representative: Beckmann, Claus
(86) International application number: PCT/JP2014/066135
(87) International publication number: WO 2015/005081

(56) References cited:
- CN-A- 102 367 300
- CN-A- 102 417 630
- CN-A- 102 432 926
- JP-A- H1 087 897
- JP-A- 2012 097 213
- DATABASE WPI Week 200503 Thomson Scientific, London, GB; AN 2005-025145 XP002765382, -& JP 2004 353709 A (NIPPON SEIKO KK) 16 December 2004 (2004-12-16)

## Description

### TECHNICAL FIELD

The present invention relates to a nitrile rubber composition. More particularly, the present invention relates to a nitrile rubber composition that can yield a vulcanization molded product having excellent muddy water resistance, low torque characteristics, and the like.

### BACKGROUND ART

Due to recent global environmental problems, weight saving and reduction in fuel consumption have been strongly desired in the vehicle industry. In response to this trend, reduction in torque is required for rotation system parts, such as oil seals, among vehicle parts in order to improve the fuel consumption of vehicles. Reduction in torque is also required for wheel rolling bearings (hub bearings). On the other hand, wheel rolling bearings are used outdoors, and in extreme cases, are used in a harsh environment in which they are exposed to muddy water. Thus, their elastic members (oil seals) are further required to have muddy water resistance; however, muddy water resistance has a contradictory relationship with torque performance.

For the purpose of imparting muddy water resistance to rolling bearing oil seals, an addition of clay to nitrile rubber is proposed. However, conductivity is often required for recent rolling bearing oil seals to take measures against radio noise generated by static electricity during running or stopping. Since the addition of clay leads to a significant decrease in conductivity, there is a limitation not to be able to apply it to conductivity applications.

Moreover, calcium chloride as a snow melting agent and sodium chloride as an antifreezing agent and the like are sprayed on roads in snowy areas (cold areas). Wheel rolling bearings are to be used also in such an environment. After a vehicle runs on a road on which an antifreezing agent has been sprayed, the lower part of the vehicle body is generally washed with water in order to prevent rust of metal (iron) parts of the vehicle.

When an oil seal is exposed to an antifreezing agent aqueous solution, it is considered, in an extreme case, that the aqueous solution becomes an electrolyte solution, and that an electric potential difference is generated between a conductive rubber, which is an oil seal constituent material, and a metal, such as a wheel shaft, thereby causing electric energization. Iron is ionized in a process leading to the electric energization, and the ionized iron serves as a catalyst to promote the oxidative degradation of the rubber used as a sealing material, increasing the swelling of the rubber in water. In particular, in the case of an oil seal, the inside of a rubber lip is fixed by adhering to a metal ring; thus, when the swelling increases, the outside of the lip may probability undergo wavy deformation.

Furthermore, nitrile rubber is generally used as the material for oil seals for wheel rolling bearings in terms of material properties and cost; however, nitrile rubber contains butadiene units that are susceptible to oxidation in terms of their chemical structure. Among nitrile rubbers, nitrile rubber with a low acrylonitrile content has excellent low-temperature characteristics, and thus tends to be used particularly in cold areas. Since the nitrile rubber with a low acrylonitrile content contains relatively large amounts of butadiene units, its chemical structure is considered to be more susceptible to oxidation.

The present applicant has previously proposed a nitrile rubber composition that maintains characteristics as a conductive material, satisfies muddy water resistance and sealing properties required for oil seals for wheel rolling bearings for vehicles, etc., and can further achieve low torque characteristics. The nitrile rubber composition comprises 5 to 50 parts by weight of carbon black, 5 to 60 parts by weight of graphite having an average particle diameter of 5 µm or less, and 5 to 50 parts by weight of conductive carbon other than these carbon black and graphite, based on 100 parts by weight of nitrile rubber (Patent Document 1).

Rubber vulcanization molded products that are vulcanization-molded from the alkylated diphenylamine antioxidant-containing nitrile rubber compositions disclosed in the Examples of this prior art document satisfy muddy water resistance and sealing properties, as well as low torque characteristics; however, the rubber volume change is large when the product is washed with water after exposure to an antifreezing agent, as shown in Comparative Example 2, provided later. Improvement is required in this respect.

### PRIOR ART DOCUMENT

### PATENT DOCUMENT

Patent Document 1 : JP-A-2012-97213

### OUTLINE OF THE INVENTION

### PROBLEM TO BE SOLVED BY THE INVENTION

An object of the present invention is to provide a nitrile rubber composition that can yield a vulcanization molded product, besides maintaining characteristics as a conductive material, satisfying muddy water resistance, sealing properties, and low torque characteristics required for rolling bearing oil seals for vehicles, etc., and having a rubber volume change kept low when the product is washed with water after exposure to an antifreezing agent.

### MEANS FOR SOLVING THE PROBLEM

The above object of the present invention can be achieved by the nitrile rubber composition defined in claim 1 and a rubber vulcanization molded product that is vulcanization-molded therefrom.

### EFFECT OF THE INVENTION

A rubber vulcanization molded product that is vulcanization-molded from the nitrile rubber composition of the present invention has excellent effect of besides maintaining characteristics as a conductive material, satisfying muddy water resistance, sealing properties, and low torque characteristics required for rolling bearing oil seals for vehicles, etc., and having a rubber volume change kept low even when the product is washed with water after exposure to a snow melting agent or an antifreezing agent.

### EMBODIMENTS FOR CARRYING OUT THE INVENTION

The NBR used herein is acrylonitrile-butadiene rubber having a bound acrylonitrile content of 15 to 48%, preferably 22 to 35%, and a Mooney viscosity ML₁₊₄(100°C) of 25 to 85, preferably 30 to 60. Practically, commercial products, such as N240S and N241 (produced by JSR Corporation), can be used as they are. To the NBR, carbon black, graphite having a specific average particle diameter, conductive carbon other than these carbon black and graphite, and 2,5-di-tert-butylhydroquinone or 2,5-di-tert-amylhydroquinone as an antioxidant are added to prepare the NBR composition of the present invention as defined in claim 1.

As the carbon black, SRF or HAF is used at a ratio of 5 to 50 parts by weight, preferably 15 to 40 parts by weight, based on 100 parts by weight of NBR. When the amount of carbon black used is less than this range, the material strength is insufficient. In contrast, when the amount of carbon black used is greater than this range, the material hardness is overly high, which is not preferable.

The graphite used herein has an average particle diameter (measured by Microtrac HRA9320-X100, produced by Nikkiso Co., Ltd.) of 5 µm or less, preferably 1 to 5 µm. When the average particle diameter of graphite is greater than this range, the torque value increases, and a reduction in torque, which is the object of the present invention, cannot be achieved. As the graphite, a commercial product having such an average particle diameter can generally be used as it is at a ratio of 5 to 60 parts by weight, preferably 10 to 60 parts by weight, based on 100 parts by weight of NBR. When the amount of graphite used is less than this range, the effect of reducing torque cannot be obtained. In contrast, when the amount of graphite used is greater than this range, the processability is reduced, which is not preferable.

The conductive carbon other than these carbon black and graphite is Ketjenblack or acetylene black. Such conductive carbon is used at a ratio of 5 to 50 parts by weight, preferably 5 to 40 parts by weight, based on 100 parts by weight of NBR. When the amount of conductive carbon used is less than this range, the volume resistivity increases. In contrast, when the amount of conductive carbon used is greater than this range, the material hardness is overly high, which is not preferable.

Carbon black, graphite, and conductive carbon other than these carbon black and graphite are used in a total amount of 15 to 100 parts by weight, preferably 15 to 80 parts by weight, based on 100 parts by weight of NBR. When the total amount of these is less than this range, the volume resistivity increases. In contrast, when the total amount of these is greater than this range, the material hardness is overly high, which is not preferable.

As an antioxidant, amine-ketone-based antioxidants, aromatic secondary amine-based antioxidants, monophenol-based antioxidants, bisphenol-based antioxidants, polyphenol-based antioxidants, benzimidazole-based antioxidants, dithiocarbamate-based antioxidants, thiourea-based antioxidants, phosphorous acid-based antioxidants, organic thio acid-based antioxidants, special wax-based antioxidants, and the like are listed; however, only polyphenol-based antioxidants as defined in claim 1 are effective to achieve the object of the present invention.

As the polyphenol-based antioxidant, 2,5-di-tert-butylhydroquinone or 2,5-di-tert-amylhydroquinone is used at a ratio as defined in claim 1. When the amount of antioxidant used is less than this range, the rubber volume change coefficient cannot be kept low when the product is washed after exposure to a snow melting agent or an antifreezing agent. In contrast, when the amount of antioxidant used is greater than this range, the scorch time is short.

For vulcanization of NBR mixed with carbon black, graphite, and conductive carbon other than these carbon black and graphite, a sulfur vulcanization system as defined in claim 1 is used.

In the case of sulfur vulcanization, a vulcanization accelerator is generally used in combination. The vulcanization accelerators used in the present invention are thiuram-based vulcanization accelerators, namely tetramethylthiuram disulfide or tetrakis(2-ethylhexyl)thiuram disulfide. In particular, the thiuram disulfide-based vulcanization accelerator is used in combination with sulfur.

The compounding amount of polyphenol-based antioxidant based on 100 parts by weight of nitrile rubber varies depending on the type of the thiuram disulfide-based vulcanization accelerator. That is, when tetramethylthiuram disulfide is used, the amount of antioxidant is 0.5 to 2.5 parts by weight, preferably 1 to 2 parts by weight. When tetrakis(2-ethylhexyl)thiuram disulfide is used, the amount of antioxidant is 1.5 to 3.5 parts by weight, preferably 2 to 3 parts by weight.

In addition to the above components, various compounding agents generally used in the rubber industry are suitably added to the composition. Examples of the compounding agents include reinforcing agents other than carbon black, such as silica and activated calcium carbonate; fillers, such as talc and calcium silicate; processing aids, such as stearic acid, palmitic acid, and paraffin wax; acid acceptors, such as zinc oxide, magnesium oxide, and hydrotalcite; plasticizers, such as dioctyl sebacate (DOS); and the like.

The preparation of the composition is performed by kneading the components using a kneading machine, such as an Intermix, kneader, or Banbury mixer, or using an open roll. The vulcanization of the composition is generally performed by heating at about 160 to 200°C for about 3 to 30 minutes using an injection molding machine, compression molding machine, vulcanizing press, or the like. Further, if necessary, secondary vulcanization is performed by heating at about 140 to 160°C for about 0.5 to 10 hours.

### EXAMPLES

The following describes the present invention with reference to Examples.

### Example 1

**[Formulation Example I]**

| | |
|---|---|
| Nitrile rubber (JSR N240S, produced by JSR Corporation; AN content: 26%, Mooney viscosity ML₁₊₄(100°C): 56) | 100 parts by weight |
| Ketjenblack (EC-600JD, produced by Lion Corporation) | 7 parts by weight |
| Carbon black (Seast S-SVH, produced by Tokai Carbon Co., Ltd.) | 25 parts by weight |
| Graphite (HOP, produced by Nippon Graphite Industries, Co., Ltd.; average particle diameter: about 3 µm) | 30 parts by weight |
| Zinc oxide (produced by Sakai Chemical Industry Co., Ltd.) | 10 parts by weight |
| Stearic acid (produced by Miyoshi Oil & Fat Co., Ltd.) | 1 part by weight |
| Wax (Suntight R, produced by Seiko Chemical Co., Ltd.) | 2 parts by weight |
| 2,5-Di-tert-butylhydroquinone (polyphenol-based antioxidant; Nocrac NS-7, | 2 parts by weight |
| produced by Ouchi Shinko Chemical Industrial Co., Ltd.) | |
| Plasticizer (Vulkanol OT, produced by Lanxess) | 9 parts by weight |
| Sulfur (produced by Tsurumi Chemical Industrial Co., Ltd.) | 1 part by weight |
| Vulcanization accelerator (tetramethylthiuram disulfide; Nocceler TT, produced by Ouchi Shinko Chemical Industrial Co., Ltd.) | 2.8 parts by weight |
| Vulcanization accelerator (sulfenamide-based vulcanization accelerator; Nocceler CZ, produced by Ouchi Shinko Chemical Industrial Co., Ltd.) | 3.8 parts by weight |

The above blending components were kneaded with a kneader and an open roll, and the compound characteristics (Mooney viscosity and scorch time) were measured. The kneaded product was then subjected to press vulcanization at 170°C for 10 minutes and oven vulcanization at 150°C for 30 minutes, thereby producing test pieces (250 x 120 x 2 mm and 50 x 20 x 0.2 mm). The obtained test pieces were used to measure normal state physical properties and perform a dipping test.
Compound characteristics: According to JIS K6300-1: 2001 (Mooney test) corresponding to ASTM D1646

The minimum Mooney viscosity at 125°C and scorch time T5 were measured. The scorch time is preferably 6 minutes or more in terms of the compound stability and the vulcanizing and molding properties
Normal state physical properties: According to JIS K6253-3: 1997 (hardness; durometer A instant) corresponding to ASTM D2240
According to JIS K6251: 2010 (tensile strength, elongation at break) corresponding to ASTM D412

A test piece in the size of 250 x 120 x 2 mm was used
Dipping test: Two test pieces in the size of 50 x 20 x 0.2 mm were fixed by piercing them with an iron insect pin, and salt water dipping, drying, and tap water dipping were performed according to the following procedures a to c. Then, the volume change before and after the test was calculated
   a. Dipped in 50 ml of 5 wt.% salt water at 70°C for 70 hours
      - simulation of exposure of an oil seal by an antifreezing agent spray during running on a snow covered road -
   b. Dried at ordinary temperature (23°C) for 12 hours
      - simulation of a condition after running on a road on which no antifreezing agent is sprayed and before washing -
   c. Dipped in 50 ml of tap water at 23°C for 70 hours
      - simulation of washing with tap water to prevent rust of metal vehicle parts -

### Example 2

In Example 1, the amount of 2,5-di-tert-butylhydroquinone was changed to 1 part by weight.

### Example 3

In Example 1, the same amount (2 parts by weight) of 2,5-di-tert-amylhydroquinone (polyphenol-based antioxidant; Nocrac DAH, produced by Ouchi Shinko Chemical Industrial Co., Ltd.) was used in place of 2,5-di-tert-butylhydroquinone.

### Example 4

In Example 3, the amount of 2,5-di-tert-butylhydroquinone was changed to 1 part by weight.

### Comparative Example 1

In Example 1, 2,5-di-tert-butylhydroquinone was not used.

### Comparative Example 2

In Example 1, 4 parts by weight of alkylated diphenylamine (aromatic secondary amine-based antioxidant; Nocrac ODA-NS, produced by Ouchi Shinko Chemical Industrial Co., Ltd.) was used in place of 2,5-di-tert-butylhydroquinone.

### Comparative Example 3

In Example 1, the same amount (2 parts by weight) of N,N'-di-2-naphthyl-p-phenylenediamine (aromatic secondary amine-based antioxidant; Nocrac White, produced by Ouchi Shinko Chemical Industrial Co., Ltd.) was used in place of 2,5-di-tert-butylhydroquinone.

### Comparative Example 4

In Example 1, 3 parts by weight of dilauryl thiodipropionate (organic thio acid-based antioxidant; Nocrac 400, produced by Ouchi Shinko Chemical Industrial Co., Ltd.) was used in place of 2,5-di-tert-butylhydroquinone.

### Comparative Example 5

In Example 1, the same amount (2 parts by weight) of 2,2-methylenebis(4-ethyl-6-tert-butylphenol) (bisphenol-based antioxidant; Nocrac NS-5, produced by Ouchi Shinko Chemical Industrial Co., Ltd.) was used in place of 2,5-di-tert-butylhydroquinone.

### Comparative Example 6

In Example 1, the amount of 2,5-di-tert-butylhydroquinone was changed to 3 part by weight.

### Comparative Example 7

In Example 1, 3 parts by weight of 2,5-di-tert-amylhydroquinone (Nocrac DAH) was used in place of 2,5-di-tert-butylhydroquinone.

Table 1 below shows the results obtained in the above Examples and Comparative Examples.

**Table 1**

| | Example | | | | Comparative Example | | | | | | |
|---|---|---|---|---|---|---|---|---|---|---|---|
| Measurement-evaluation item | 1 | 2 | 3 | 4 | 1 | 2 | 3 | 4 | 5 | 6 | 7 |
| [Compound characteristics] | | | | | | | | | | | |
| Mooney viscosity | 45 | 44 | 41 | 40 | 47 | 43 | 39 | 47 | 44 | 47 | 43 |
| Scorch time (min) | 7.2 | 10.0 | 7.0 | 10.2 | 10.4 | 10.9 | 9.7 | 5.4 | 6.1 | 4.4 | 5.2 |

| [Normal state physical properties] | | | | | | | | | | | |
|---|---|---|---|---|---|---|---|---|---|---|---|
| Hardness (Duro A) | 74 | 74 | 74 | 74 | 76 | 75 | 74 | 74 | 75 | 75 | 75 |
| Tensile strength (MPa) | 13.0 | 12.4 | 12.2 | 11.9 | 14.6 | 15.2 | 14.0 | 13.5 | 14.0 | 14.0 | 14.2 |
| Elongation at break (%) | 250 | 260 | 240 | 250 | 250 | 290 | 280 | 250 | 280 | 230 | 230 |

| [Dipping test] | | | | | | | | | | | |
|---|---|---|---|---|---|---|---|---|---|---|---|
| Volume change (%) | +2.8 | +3.3 | +3.0 | +3.6 | +11.2 | +7.3 | +6.7 | +2.7 | +8.2 | +2.6 | +2.8 |

### Example 5

In Example 1, the following Formulation Example II was used in place of Formulation Example I.

**[Formulation Example II]**

| | |
|---|---|
| Nitrile rubber (JSR N240S, produced by JSR Corporation; AN content: 26%, Mooney viscosity ML₁₊₄(100°C): 56) | 100 parts by weight |
| Carbon black (Seast S-SVH, produced by | 25 parts by weight |
| Tokai Carbon Co., Ltd.) | |
| Graphite (HOP, produced by Nippon Graphite Industries, Co., Ltd.; average particle diameter: about 3 µm) | 30 parts by weight |
| Ketjenblack (EC-600JD, produced by Lion Corporation) | 7 parts by weight |
| Zinc oxide (produced by Sakai Chemical Industry Co., Ltd.) | 10 parts by weight |
| Stearic acid (produced by Miyoshi Oil & Fat Co., Ltd.) | 1 part by weight |
| Wax (Suntight R, produced by Seiko Chemical Co., Ltd.) | 2 parts by weight |
| 2,5-Di-tert-butylhydroquinone (Nocrac NS-7) | 3 parts by weight |
| Plasticizer (Vulkanol OT, produced by Lanxess) | 9 parts by weight |
| Sulfur (produced by Tsurumi Chemical Industrial Co., Ltd.) | 1 part by weight |
| Vulcanization accelerator (tetrakis(2-ethylhexyl)thiuram disulfide; Nocceler TOT-N, produced by Ouchi Shinko Chemical Industrial Co., Ltd.) | 12 parts by weight |
| Vulcanization accelerator (Nocceler CZ) | 3.8 parts by weight |

### Example 6

In Example 5, the amount of 2,5-di-tert-butylhydroquinone was changed to 2 part by weight.

### Example 7

In Example 5, the same amount (3 parts by weight) of 2,5-di-tert-amylhydroquinone was used in place of 2,5-di-tert-butylhydroquinone.

### Example 8

In Example 7, the amount of 2,5-di-tert-amylhydroquinone was changed to 2 part by weight.

### Comparative Example 8

In Example 5, 2,5-di-tert-butylhydroquinone was not used.

### Comparative Example 9

In Example 5, 4 parts by weight of alkylated diphenylamine was used in place of 2,5-di-tert-butylhydroquinone.

### Comparative Example 10

In Example 5, 2 parts by weight of 2,2-methylenebis(4-ethyl-6-tert-butylphenol) was used in place of 2,5-di-tert-butylhydroquinone.

### Comparative Example 11

In Example 5, 4 parts by weight of 2,5-di-tert-butylhydroquinone was used.

### Comparative Example 12

In Example 5, 4 parts by weight of 2,5-di-tert-amylhydroquinone (Nocrac DAH) was used in place of 2,5-di-tert-butylhydroquinone.

Table 2 below shows the results obtained in the above Examples 5 to 8 and Comparative Examples 8 to 12.

**Table 2**

| | Example | | | | Comparative Example | | | | |
|---|---|---|---|---|---|---|---|---|---|
| Measurement-evaluation item | 5 | 6 | 7 | 8 | 8 | 9 | 10 | 11 | 12 |
| [Compound characteristics] | | | | | | | | | |
| Mooney viscosity | 42 | 42 | 40 | 40 | 45 | 42 | 43 | 45 | 44 |
| Scorch time (min) | 7.8 | 11.2 | 7.5 | 10.8 | 10.9 | 10.6 | 6.8 | 4.8 | 5.6 |
| [Normal state physical properties] | | | | | | | | | |
| Hardness (Duro A) | 74 | 74 | 74 | 74 | 75 | 75 | 74 | 75 | 75 |
| Tensile strength (MPa) | 12.2 | 11.5 | 10.8 | 10.9 | 15.1 | 15.2 | 14.3 | 14.1 | 14.2 |
| Elongation at break (%) | 280 | 270 | 290 | 290 | 280 | 290 | 290 | 230 | 240 |
| [Dipping test] | | | | | | | | | |
| Volume change (%) | +3.0 | +3.4 | +3.0 | +3.6 | +11.8 | +7.8 | +8.9 | +3.2 | +2.9 |

The above results demonstrate the following:
(1) In all of the Examples, the scorch time T5 is as long as 7 minutes or more, and the volume change after the dipping test is as small as 3.6% or less. Thus, the obtained vulcanizates are excellent in both of these characteristics.
(2) When an antioxidant is not used, the volume change after the dipping test is very large, and the salt water resistance is inferior (Comparative Examples 1 and 8).
(3) With the formulation specified in Patent Document 1, when aromatic secondary amine-based antioxidant used in the Examples of Patent Document 1, i.e., an alkylated diphenylamine, is added, the rubber is significantly swollen after the dipping test, and the salt water resistance is inferior (Comparative Examples 2 and 9).
(4) When N,N'-di-2-naphthyl-p-phenylenediamine, which is an aromatic secondary amine-based antioxidant, is added as the antioxidant, the swelling of the rubber after the dipping test is significant, and the salt water resistance is inferior (Comparative Example 3).
(5) When only dilauryl thiodipropionate, which is an organic thio acid-based antioxidant, is added as the antioxidant, the swelling of the rubber after the dipping test can be suppressed; however, the scorch time T5 is short, and the compound storage properties or the vulcanizing and molding properties are inferior (Comparative Example 4).
(6) When 2,2-methylenebis(4-ethyl-6-tert-butylphenol), which is a bisphenol-based antioxidant, is added, the swelling of the rubber after the dipping test cannot be suppressed, and the salt water resistance is inferior (Comparative Examples 5 and 10).
(7) When 2,5-di-tert-butylhydroquinone or 2,5-di-tert-amylhydroquinone is used in an amount less than or more than the specified amount, the scorch time, which indicates the compound stability and the vulcanizing and molding properties, does not reach the desired time of 6 minutes or more (Comparative Examples 6, 7, 11, and 12).

### INDUSTRIAL APPLICABILITY

The rubber vulcanization molded product that is vulcanization-molded from the nitrile rubber composition of the present invention is a material that satisfies muddy water resistance, salt water resistance, sealing properties, and lower torque, and can therefore be effectively used as a muddy water sealing material for vehicle hub bearings.

## Claims

1. A nitrile rubber composition comprising 5 to 50 parts by weight of SRF or HAF carbon black, 5 to 60 parts by weight of graphite having an average particle diameter of 5 µm or less, 5 to 50 parts by weight of Ketjenblack or acetylene black, based on 100 parts by weight of nitrile rubber, a sulfur-thiuram-based vulcanization accelerator as a vulcanization system and 2,5-di-tert-butylhydroquinone or 2,5-di-tert-amylhydroquinone as an antioxidant, wherein when the thiuram-based vulcanization accelerator is tetramethylthiuram disulfide, 0.5 to 2.5 parts by weight of 2,5-di-tert-butylhydroquinone or 2,5-di-tert-amylhydroquinone is contained, when the thiuram-based vulcanization accelerator is tetrakis(2-ethylhexyl)thiuram disulfide, 1.5 to 3.5 parts by weight of 2,5-di-tert-butylhydroquinone or 2,5-di-tert-amylhydroquinone is contained.

2. A rubber vulcanization molded product that is vulcanization-molded from the nitrile rubber composition according to claim 1.

3. The rubber vulcanization molded product according to claim 2, which is used as a sealing material.

4. The vulcanization molded product according to claim 3, which is used as a rolling bearing oil seal.

## Patentansprüche

1. Nitrilkautschukzusammensetzung, umfassend 5 bis 50 Gewichtsteile SRF- oder HAF-Ruß, 5 bis 60 Gewichtsteile Graphit mit einem durchschnittlichen Teilchendurchmesser von 5 µm oder weniger, 5 bis 50 Gewichtsteile Ketjenblack oder Acetylenruß, bezogen auf 100 Gewichtsteile des Nitrilkautschuks, einen Vulkanisationsbeschleuniger auf Schwefel-Thiuram-Basis als Vulkanisationssystem und 2,5-Di-tert-butylhydrochinon oder 2,5-Di-tert-amylhydrochinon als Antioxidans, wobei, wenn der Vulkanisationsbeschleuniger auf Thiuram-Basis Tetramethylthiuramdisulfid ist, 0,5 bis 2,5 Gewichtsteile 2,5-Di-tert-butylhydrochinon oder 2,5-Di-tert-amylhydrochinon enthalten sind, wenn der Vulkanisationsbeschleuniger auf Thiuram-Basis Tetrakis(2-ethylhexyl)thiuramdisulfid ist, 1,5 bis 3,5 Gewichtsteile 2,5-Di-tert-butylhydrochinon oder 2,5-Di-tert-amylhydrochinon enthalten sind.

2. Geformtes Kautschukvulkanisationserzeugnis, das vulkanisationsgeformt ist aus der Nitrilkautschukzusammensetzung nach Anspruch 1.

3. Geformtes Kautschukvulkanisationserzeugnis nach Anspruch 2, das als Dichtungsmaterial verwendet wird.

4. Geformtes Vulkanisationserzeugnis nach Anspruch 3, das als Wälzlageröldichtung verwendet wird.

## Revendications

1. Composition de caoutchouc nitrile comprenant 5 à 50 parties en poids de noir de carbone SRF ou HAF, 5 à 60 parties en poids d'un graphite présentant un diamètre particulaire moyen de 5 µm ou moins, 5 à 50 parties en poids de noir de Ketjen ou de noir d'acétylène, sur la base de 100 parties en poids de caoutchouc nitrile, un accélérateur de vulcanisation à base de soufre-thiurame en tant que système de vulcanisation et la 2,5-di-tert-butylhydroquinone ou la 2,5-di-tert-amylhydroquinone en tant qu'antioxydant, dans laquelle quand l'accélérateur de vulcanisation à base de thiurame est le disulfure de tétraméthylthiurame, 0,5 à 2,5 parties en poids de 2,5-di-tert-butylhydroquinone ou de 2,5-di-tert-amylhydroquinone sont contenues, quand l'accélérateur de vulcanisation à base de thiurame est le disulfure de tétrakis(2-éthylhexyl)thiurame, 1,5 à 3,5 parties en poids de 2,5-di-tert-butylhydroquinone ou de 2,5-di-tert-amylhydroquinone sont contenues.

2. Produit moulé par vulcanisation de caoutchouc qui est moulé par vulcanisation à partir de la composition de caoutchouc nitrile selon la revendication 1.

3. Produit moulé par vulcanisation de caoutchouc selon la revendication 2, qui est utilisé comme matériau d'étanchéité.

4. Produit moulé par vulcanisation selon la revendication 3, qui est utilisé comme joint étanche à l'huile pour palier à roulement.
